Europäisches Patentamt

European Patent Office

Office européen des brevets

(19)

(11) Veröffentlichungsnummer: **0 024 352**
**A1**

(12) # EUROPÄISCHE PATENTANMELDUNG

(21) Anmeldenummer: **80104846.3**

(22) Anmeldetag: **14.08.80**

(51) Int. Cl.³: **G 07 D  7/00,** G 03 B  17/48,
G 03 B  27/32, G 06 K  9/00

(30) Priorität: **17.08.79  DE 7923564 U**

(43) Veröffentlichungstag der Anmeldung: **04.03.81**
**Patentblatt 81/9**

(84) Benannte Vertragsstaaten: **AT BE CH DE FR GB IT LI LU
NL SE**

(71) Anmelder: **Petersen, Hans Peter, Ringhoffer Strasse 82,
D-8044 Unterschleissheim (DE)**

(72) Erfinder: **Petersen, Hans Peter, Ringhoffer Strasse 82,
D-8044 Unterschleissheim (DE)**

(74) Vertreter: **Patentanwälte Dipl.-Ing. A. Grünecker,
Dr.-Ing. H. Kinkeldey, Dr.-Ing. W. Stockmair,, Dr. rer. nat.
K. Schumann, Dipl.-Ing. P.H. Jakob, Dr. rer. nat. G.
Bezold Maximilianstrasse 43, D-8000 München 22 (DE)**

(54) **Einrichtung zum Prüfen und Kopieren von Dokumenten.**

(57) Die Einrichtung weist eine Videokamera (4) auf, mit der
das zu prüfende Dokument abgetastet und in einer daran angeschlossenen elektrischen Einrichtung (10), beispielsweise
einem Zentralcomputer, gelesen wird. Um von dem gelesenen
Dokument im Bedarfsfall eine fotografische Aufnahme oder
eine sonstige Kopie anzufertigen, ist gemeinsam in dem die Videokamera enthaltenden Gehäuse (1) eine Kamera oder Kopiereinrichtung (3) angeordnet, der das Bild des Dokuments
zugeführt werden kann. Zum Anfertigen einer Kopie oder Fotografie kann das Dokument in dem Gerät verbleiben.

EP 0 024 352 A1

0024352

PATENTANWÄLTE

REPRESENTATIVES BEFORE THE
EUROPEAN PATENT OFFICE

A. GRÜNECKER
DIPL-ING

H. KINKELDEY
DR.-ING.

W. STOCKMAIR
DR.-ING · AₐE (CALTECH)

K. SCHUMANN
DR. RER. NAT · DIPL-PHYS.

P. H. JAKOB
DIPL-ING.

G. BEZOLD
DR. RER. NAT · DIPL-CHEM.

8 MÜNCHEN 22
MAXIMILIANSTRASSE 43

Hans-Peter Petersen
Ringhoffer Straße 82
8o44 Unterschleißheim

14. Aug. 1980
EP 219 – 50/He

Einrichtung zum Prüfen und Kopieren von Dokumenten

Beschreibung

Die Erfindung bezieht sich auf eine Einrichtung zum Prüfen und Kopieren von Dokumenten, mit einer Dokumentenauflagefläche und einem eine Videokamera aufweisenden Gehäuse, sowie einer Kopiereinrichtung, beispielsweise einer fotographischen Kamera.

Es gibt einige Anwendungsgebiete, bei denen man Dokumente auf vorgegebene Kriterien prüft und einzelne in Abhängigkeit vom Prüfergebnis ausgewählte Dokumente anschließend kopieren will. Im grenzüberschreitenden Verkehr prüft man üblicherweise Pässe auf bestimmte Daten, indem man die Daten mit Hilfe einer Videokamera liest und sie in einen Zentralcomputer einspeist, der die Prüfung vornimmt und das Ergebnis anzeigt. In bestimmten Fällen möchte man ein Foto von dem gelesenen Paß zurückbehalten. Bisher bediente man sich dazu eines zusätzlichen Paßfotographiergerätes, in das der ausgewählte Paß eingelegt werden mußte, nachdem er von dem Datenlesegerät ausgewertet wurde. Abgesehen davon, daß ein solches zusätzliches Paßfotographiergerät unnötigen Raum in Anspruch nimmt, ist es mühsam und zeitraubend, den Paß zusätzlich noch in das Paßfotographiergerät einzulegen, um ein Foto anzufertigen.

Hier will die Erfindung Abhilfe schaffen. Die Erfindung, wie sie in den Ansprüchen gekennzeichnet ist, löst die Aufgabe, das Auswerten und evtl. anschließende Fotographieren eines Passes oder anderer Dokumente zu erleichtern.

Die durch die Erfindung erreichten Vorteile sind im wesentlichen darin zu sehen, daß ein zu fotographierender Paß oder dergleichen, nachdem seine Daten ausgewertet wurden, nicht aus dem Datenlesegerät herausgenommen zu werden braucht. Das neue Gerät ist deshalb leichter zu bedienen, arbeitet schneller und kann platzsparend ausgebildet werden.

Im folgenden wird die Erfindung anhand der Zeichnung näher erläutert. Es zeigt:

Fig. 1    ein erstes Ausführungsbeispiel der Erfindung,
          und

Fig. 2    ein zweites Ausführungsbeispiel der Erfindung,
          bei dem die der Videokamera und der Kopiereinrichtung zugeordneten Optiken zusammen mit
          dem Umlenkspiegel integriert sind.


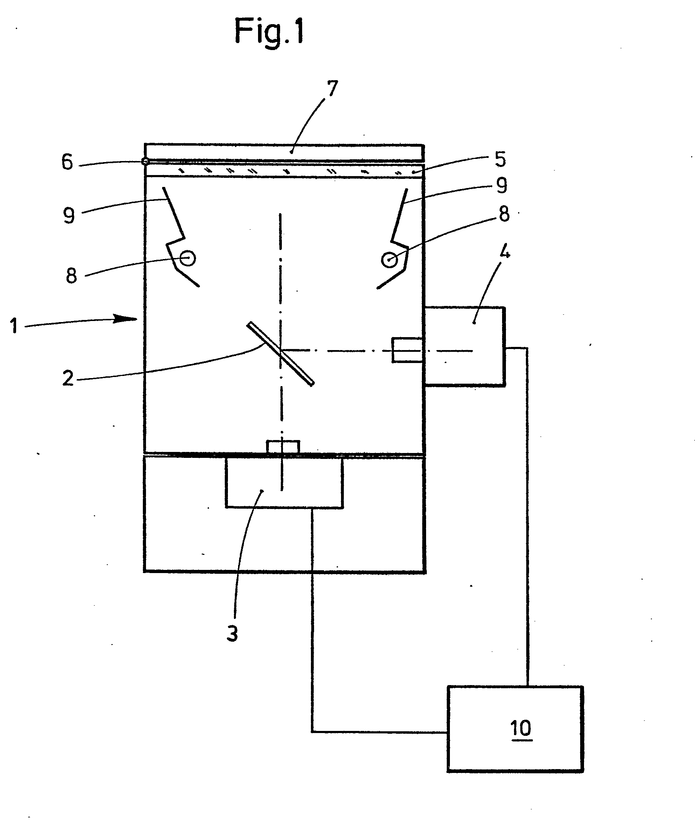

In dem Ausführungsbeispiel nach Fig. 1 ist in einem kastenförmigen Gehäuse  1 im mittleren Teil ein teildurchlässiger Spiegel 2 angeordnet, der zur Horizontalen einen
Winkel von 45° einnimmt. Unter dem Spiegel 2 befindet
sich eine fotographische Kamera 3, deren optische Achse
in der Vertikalen liegt. Seitlich neben dem Spiegel 2
ist eine Videokamera 4 angeordnet, deren optische Achse
horizontal liegt. Im oberen Teil des Gehäuses 1 ist eine
Dokumentenauflagefläche 5 ausgebildet, die mit einem
an einem Scharnier 6 befestigten Deckel 7 schließbar ist.
In dem Bereich unmittelbar unterhalb der Dokumentenauflagefläche 5 des Gehäuses 1 befindet sich eine Beleuchtungseinrichtung, bestehend aus zwei Lampen 8 und einander gegenüberstehenden Spiegelflächen 9.


Im Betrieb ist die Videokamera 4 über eine elektrische
Leitung mit einer Datenauswerteeinrichtung, beispielsweise einem Computer 10, verbunden, der seinerseits an
die fotographische Kamera 3 angeschlossen ist. Die von
der Videokamera 4 an den Computer 10 abgegebenen Bildsignale werden dort ausgewertet und auf vorgegebene
Kriterien überprüft. Im Bedarfsfall wird durch den
Computer 10 die fotographische Kamera 3 ausgelöst, um
ein Bild des auf der Dokumentenauflagefläche 5 befindlichen Dokuments anzufertigen.


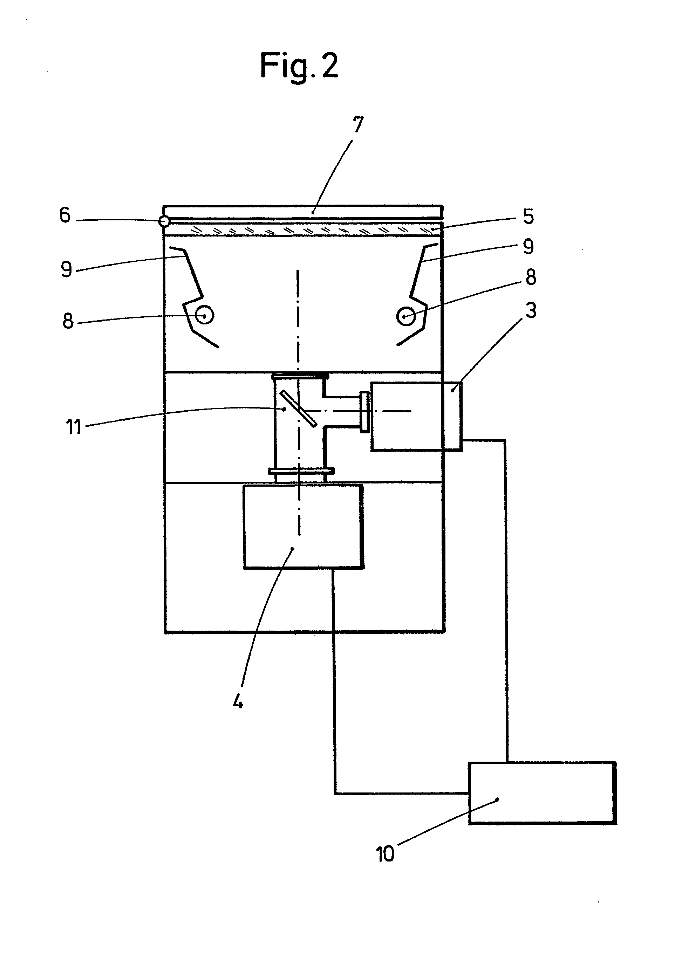

In dem in Fig. 2 dargestellten Ausführungsbeispiel sind
die Optiken für die Videokamera 4 und die fotographische
Kamera 3 zusammen mit dem Spiegel 2 als Baueinheit 11
integriert.

Die fotographische Kamera 3 kann auch als gewöhnliches Kopiergerät ausgebildet sein. Verwendet man statt eines teildurchlässigen Spiegels 2 einen Klappspiegel, ist es vorteilhaft, die Kameraauslösung mit der Mechanik für den Klappspiegel so zu verbinden, daß auf ein Betätigungssignal hin der Klappspiegel umgelegt und dann automatisch die Kamera 3 betätigt wird. Statt eines Spiegels läßt sich auch ein Prisma verwenden.

Insbesondere in der Ausbildung der beschriebenen Einrichtung zum Lesen von Pässen oder Personalausweisen, erscheint es sinnvoll, der Dokumentenauflagefläche einen besonderen Bereich zuzuordnen, der einen speziellen Lesekopf für dort speziell zu lesende Daten, beispielsweise die Nummer des Personalausweises, aufweist. In diesem Datenfenster können auch externe Daten, wie das Datum, die Uhrzeit, Belichtungsdaten, diensthabende Personen etc. eingeblendet werden, um sie auf der anzufertigenden Kopie oder dem Film zusätzlich zur Verfügung zu haben.

0024352

PATENTANWÄLTE

REPRESENTATIVES BEFORE THE
EUROPEAN PATENT OFFICE

A. GRÜNECKER
DIPL.-ING.

H. KINKELDEY
DR.-ING.

W. STOCKMAIR
DR.-ING. · AeE (CALTECH)

K. SCHUMANN
DR RER. NAT DIPL.-PHYS

P. H. JAKOB
DIPL.-ING.

G. BEZOLD
DR. RER. NAT · DIPL.-CHEM.

8 MÜNCHEN 22
MAXIMILIANSTRASSE 43

Hans-Peter Petersen
Ringhoffer Straße 82
8o44 Unterschleißheim

14. Aug. 1980
EP 219 - 50/He

Patentansprüche

1. Einrichtung zum Prüfen und Kopieren von Dokumenten, mit einer Dokumentenauflagefläche und einem eine Videokamera aufweisenden Gehäuse, sowie einer Kopiereinrichtung, beispielsweise einer fotografischen Kamera, dadurch g e k e n n z e i c h n e t , daß die Videokamera (4) und die Kopiereinrichtung (3) in einem gemeinsamen Gehäuse (1) angeordnet sind, und daß im Strahlengang der Videokamera (4) und der Kopiereinrichtung (3) ein Spiegel (2) angeordnet ist, mit dem das Bild des Dokuments wahlweise der Videokamera (4) oder der Kopiereinrichtung (3) übermittelbar ist.

2. Einrichtung nach Anspruch 1, dadurch g e k e n n - z e i c h n e t , daß der Spiegel als teildurchlässiger Spiegel (2) ausgebildet ist.

3. Einrichtung nach Anspruch 2, dadurch g e k e n n - z e i c h n e t , daß der teildurchlässige Spiegel (2) derart ausgebildet ist, daß er ca. 1/3 des abgehenden Lichts in Richtung der optischen Achse der Videokamera (4) reflektiert und ca. 2/3 in Richtung der optischen Achse der Kopiereinrichtung (3) durchläßt, vorzugsweise 30 % zu 70 %.

4. Einrichtung nach Anspruch 1, dadurch g e k e n n - z e i c h n e t , daß der Spiegel (2) als Klappspiegel ausgebildet ist.

5. Einrichtung nach einem der Ansprüche 1 bis 4, dadurch g e k e n n z e i c h n e t , daß die Kopiereinrichtung als fotographische Kamera (3) ausgebildet ist.

6. Einrichtung nach einem der Ansprüche 1 bis 5, dadurch g e k e n n z e i c h n e t , daß der Spiegel (2) und die Optiken der Videokamera (4) und der Kopiereinrichtung zu einer gemeinsamen optischen Einrichtung (11) integriert sind.

7. Einrichtung nach einem der Ansprüche 1 bis 6, dadurch g e k e n n z e i c h n e t , daß ein Ausschnitt der Dokumentenauflagefläche einem Datenleseteil zugeordnet ist.

# Fig.1

# Fig.2

Europäisches
Patentamt

**EUROPÄISCHER RECHERCHENBERICHT**

0024352
Nummer der Anmeldung

EP 80 10 4846.3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - A1 - 2 749 018 (GASPERI et al.) <br> * gesamtes Dokument * <br> -- | 1,7 |
| | GB - A - 1 180 824 (XEROX) <br> * Fig. 1 * <br> -- | 1,5 |
| | GB - A - 1 450 041 (GROOVE CONSULTING) <br> * Fig. * <br> -- | 1,5 |
| | DE - B - 1 111 665 (FERNSEH GMBH) <br> * Fig. 2 * <br> -- | 2 |
| | DE - B - 1 277 012 (ASAHI KOGAKU KOGYO) <br> * gesamtes Dokument * <br> ---- | 4,6 |

**KLASSIFIKATION DER ANMELDUNG (Int.Cl.3)**

G 07 D 7/00
G 03 B 17/48
G 03 B 27/32
G 06 K 9/00

**RECHERCHIERTE SACHGEBIETE (Int. Cl.3)**

G 03 B 17/00
G 03 B 27/00
G 06 K 9/00
G 06 K 19/00
G 07 C 9/00
G 07 C 11/00
G 07 D 7/00
H 04 N 7/18

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 07-11-1980 | HOPPE |

EPA form 1503.1 06.78